# EUROPEAN PATENT SPECIFICATION

(11) **EP 2 772 581 B1**
(45) Date of publication and mention of the grant of the patent: **17.10.2018**
(21) Application number: 14150083.5
(22) Date of filing: 02.01.2014
(51) Int. Cl.: D06F 39/00, D06F 58/20, F26B 25/00

(54) **Laundry treating apparatus**
Wäschebehandlungsvorrichtung
Appareil de traitement du linge

(30) Priority: 27.02.2013 KR 20130021183
(43) Date of publication of application: 03.09.2014
(73) Proprietor: LG Electronics Inc., Yeongdeungpo-gu SEOUL, 07336 (KR)
(72) Inventor: Kim, Seongkyu, Changwon-si 641-711 (KR); Yoon, Juhan, Changwon-si 641-711 (KR); Lee, Soonjo, Changwon-si 641-711 (KR); Park, Soowon, Changwon-si 641-711 (KR); Kim, Jongho, Changwon-si 641-711 (KR)
(74) Representative: Ter Meer Steinmeister & Partner

(56) References cited:
- DE-A1-102010 031 268
- DE-B3-102011 082 861
- GB-A- 335 028
- US-B1- 6 189 228

## Description

### FIELD

The present disclosure relates to a laundry treating apparatus.

### BACKGROUND

A laundry treating apparatus is an appliance to perform washing, drying, or both washing and drying. Examples of laundry treating apparatus include washing machines, dryers, and washing and drying machines.

Laundry treating apparatuses capable of drying clothing supply high-temperature air (hot air) to the clothing. These laundry treating apparatuses can be classified into an exhaust type and a circulation (or condensation) type depending on how the air flow is created.

The circulation type laundry treating apparatus removes moisture from the air discharged from the accommodation space containing the laundry (dehumidifies the air), heats the air, and then re-supplies the air to the accommodation space. The exhaust type laundry treating apparatus supplies heated air to the accommodation space, but discharges the air discharged from the accommodation space from the laundry treating apparatus instead of re-supplying the discharged air to the accommodation space.

In the case of a conventional laundry treating apparatus, if fire breaks out (for a variety of reasons) in the laundry contained in the accommodation space, flames in the accommodation space may escape the laundry treating apparatus and spread to the room where the laundry treating apparatus is installed.

When the laundry surrounded by flames stays in the accommodation space for a long time, flammable gas produced during burning of the laundry may cause explosion. When explosion occurs in the accommodation space, flames in the accommodation space may be discharged from the laundry treating apparatus by the pressure of the explosion.
DE 10 2011 082 861 B3 relates to a laundry dryer, in particular a domestic laundry dryer, which has a drum intended for laundry to be dried. The drum is provided with at least one air line for supplying air or discharging air. The laundry dryer is characterized in that the air line can be closed by means of a temperature-activated air-flow blocking unit, which contains an expansion material that expands at a temperature caused by a fire to such an extent that the air line is closed thereby.
US 6 189 228 B1 describes an apparatus that directs the flow of heated air that is being discharged from a clothing dryer, in which the dryer is positioned upon a rigid support, that elevates the dryer above the normal ground surface. The dryer discharge hose is connected at one end to the dryer, and to a valve assembly, located beneath the dryer, housed in the dryer support. The valve may be actuated so that heated air is either directed to flow through the valve assembly, into another hose which vents directly outside, or through an interior discharge opening, so that heated air is reintroduced back into the dwelling. The apparatus is provided with an access door, so that the valve can be positioned as desired. If air is being reintroduced back into the dwelling, a removable air filtration system is provided. In the event that the air filtration system becomes overwhelmed with particulate matter, the valve has a safety flap which is actuated by increased air pressure, and allows the heated air to vent outside. This prevents possible risk of fire and damage to the dryer unit due to inability to discharge heated air.

### SUMMARY

The object of the present invention is to provide, a laundry treating apparatus, that allows flames in the accommodation space containing laundry to be naturally extinguished when fire breaks out in the accommodation space.

A laundry treating apparatus also may prevent explosion from occurring in the accommodation space containing laundry due to flammable gas when fire breaks out in the accommodation space.

Further, a laundry treating apparatus may prevent flames from being discharged from the accommodation space containing laundry when explosion occurs in the accommodation space.

The object of the present invention is solved by the features of the independent claim.

The laundry treating apparatus according to the present invention may be a washing machine, a dryer, or a combined washing and drying machine.

According to one aspect of the present invention, comprising:a cabinet; an accommodation space provided in the cabinet and configured to receive laundry; a discharge portion allowing an interior of the accommodation space to communicate with an exterior of the cabinet and adapted to discharge air from the accommodation space to the exterior of the cabinet; a supply portion that supplies air into the accommodation space when the air in the accommodation space is discharged through the discharge portion; and a shutoff portion positioned at the discharge portion and adapted to open and close the discharge portion, wherein in a closed configuration, the shutoff portion is configured to close a part of the discharge portion connected to the accommodation space for preventing the air in the accommodation space from being discharged from the cabinet through the discharge portion and to open a flow passage between the inside of the cabinet and a part of the discharge portion communicating with the exterior of the cabinet for allowing air in the cabinet, but outside of the accommodation space, to be discharged from the cabinet.

The supply portion is configured to supply air based on discharging air from the accommodation space through the discharge portion. For instance, if a low pressure is generated in the accommodation space for discharging air to the outside, the low pressure may cause air being introduced through the supply portion into the accommodation space.

In a closed configuration, the shutoff portion prevents the air in the accommodation space from being discharged from the cabinet through the discharge portion.

According to the invention, the shutoff portion is also configured to allow air in the cabinet (but outside of the accommodation space) to be discharged from the cabinet through the discharge portion.

The discharge portion may comprise a connection duct that allows the air in the accommodation space to be discharged therethrough. Further, the discharge portion may comprise an exhaust duct that guides air introduced into the connection duct to the exterior of the cabinet.
The shutoff portion may comprise a penetrating hole provided at the discharge portion in the cabinet. For instance, the shutoff portion may comprise an exhaust duct penetrating hole provided at the exhaust duct to allow an interior of the exhaust duct to communicate with an interior of the cabinet. Further, the shutoff portion may comprise a penetrating hole flap provided to the exhaust duct and configured to open one of the exhaust duct penetrating hole and the exhaust duct.

The discharge portion may further comprise an exhaust fan configured to introduce the air from the accommodation space into the connection duct, e.g. by generating low pressure in the accommodation space. Here, the shutoff portion may include a penetrating hole flap configured to close the exhaust duct penetrating hole based on the exhaust fan operation. That is, when the exhaust fan is operating, the exhaust duct penetrating hole is closed, and when the operation of the exhaust fan has stopped, the penetrating hole flap closes the exhaust duct.

Hence, the shutoff portion may be configured to allow the discharge portion to communicate with an interior of the cabinet that is outside of the accommodation space when the shutoff portion is in a closed configuration, in which the part of the discharge portion connected to the accommodation space is closed.

In a preferred embodiment, the laundry treating apparatus may further comprise a pressure reduction portion positioned in the cabinet and configured to discharge air from the accommodation space into the cabinet based on a pressure in the accommodation space. In particular, the pressure reduction portion may be configured to discharge the air when the pressure in the accommodation space becomes equal to or higher than a predetermined reference pressure.

The pressure reduction portion may include an opening and closing device provided to at least one of the accommodation space, the supply portion and the discharge portion. The opening and closing device may be configured to open and allow the air in the accommodation space to flow into the cabinet based on the pressure in the accommodation space. Depending on whether the opening and closing device is provided to the accommodation space, the supply portion or the discharge portion, the opening and closing device may include an exhaust hole penetrating the accommodation space, the supply portion or the discharge portion, respectively, and a flap configured to close the exhaust hole. The exhaust hole may be configured to provide an air flow connection between the inside of the accommodation space and the remaining inside of the cabinet, i.e. outside of the accommodation space. The flap may be rotatably provided and configured to close the exhaust hole based on a self-weight of the flap.

Preferably, the cabinet further comprises an introduction port communicating with the accommodation space for introducing laundry and a door provided to open and close the
introduction port. The flap may be configured such that a pressure in the accommodation space for opening the flap is less than a pressure in the accommodation space needed to overcome a force by which the door is fastened to the cabinet and open the door. That is, the weight and/or area of the flap may be chosen such that the pressure in the accommodation space for opening the flap is less than a pressure in the accommodation space forcing the door open.

The flap may comprise a body configured to open and close the exhaust hole; a body support spaced at a predetermined distance from the body; and a guider adapted to penetrate the body and extend from the body support toward the exhaust hole.

Alternatively, he flap may comprise a body configured to open and close the exhaust hole; a body support and a rotating shaft for rotatably coupling the body to the body support.

The supply portion may comprise a supply duct configured to guide air into the accommodation space. Preferably, the supply portion additionally includes a heating duct configured to heat the air in the cabinet wherein the supply duct is configured to guide air discharged from the heating duct to the accommodation space. Furthermore, the supply duct may include a duct body extending along a direction of a height of the cabinet from the heating duct toward a supply portion connection hole connecting the interior of the supply duct with the interior of the accommodation space. An inclined surface may be provided at the supply duct, the inclined surface being inclined toward a bottom surface of the cabinet. The inclined surface is preferably provided at the supply duct near the position where the supply duct is connected with the supply portion connection hole.

Thus, the opening and closing device may be provided at the supply duct. In this case, the opening and closing device may comprise a supply duct exhaust hole penetrating the supply duct and configured to allow an interior of the supply duct to communicate with the interior of the cabinet, and a supply duct flap provided to the supply duct and configured to close the supply duct exhaust hole. Preferably, the opening and closing device is provided on the inclined surface.

Preferably, the cabinet is provided with a cabinet flow inlet or cabinet inlet port, e.g. at an upper portion of a rear surface or side surface thereof. The cabinet inlet port may penetrate the cabinet for allowing an interior of the cabinet to communicate with the outside. Preferably, the cabinet inlet port does mainly not overlap with a projection of a pressure reduction portion onto the cabinet. That is, the cabinet flow inlet may be arranged
at the cabinet separated from the projection of the pressure reduction portion, e.g. of the supply duct exhaust hole, onto the cabinet. By these means, air discharged from the pressure reduction portion is not discharged from the cabinet through the cabinet flow inlet.

In an exemplary embodiment, the laundry treating apparatus may further comprise a rear support provided in the cabinet and supporting or forming a rear surface of the accommodation space. The rear support may be provided with a supply portion connection hole connected to the supply portion.

Furthermore, the laundry treating apparatus may comprise a front support provided in the cabinet and connecting an introduction port for introducing laundry with the accommodation space. The front support may support a front surface of the accommodation space. The front support may be provided with a discharge portion connection hole that allows the air in the accommodation space to be discharged to the discharge portion.

Thus, the opening and closing device may be provided to at least one of the front support and the rear support.

The pressure reduction portion preferably comprises a discharge portion opening and closing device provided to the discharge portion and configured to open and allow the air in the accommodation space to flow into the cabinet based on the pressure in the accommodation space becoming equal to or higher than the reference pressure.

In a further embodiment, the discharge portion may comprise a connection duct that allows the air from the accommodation space to be discharged therethrough, an exhaust fan configured to suck the air from the accommodation space into the connection duct, and an exhaust duct configured to discharge air introduced into the connection duct out of the cabinet. Here, the discharge portion opening and closing device may be provided to the connection duct.

The discharge portion opening and closing device may comprise a connection duct exhaust hole that allows an interior of the connection duct to communicate with an interior of the cabinet therethrough; and a connection duct flap configured to open and close the connection duct exhaust hole.

The connection duct exhaust hole is preferably positioned between an introduction port of the connection duct and the exhaust fan. The connection duct flap may be rotatably provided to the connection duct. Further, the connection duct flap may be configured to close the connection duct exhaust hole based on a self-weight of the connection duct flap. The connection duct flap may comprise a body configured to open and close the connection duct exhaust hole; a body support provided to the connection duct and spaced at a predetermined distance from the body; and a guider adapted to penetrate the body and extend from the body support toward the connection duct exhaust hole.

The laundry treating apparatus may further comprise a cabinet flow channel allowing an interior of the cabinet to communicate with an exterior of the cabinet therethrough. In addition, an accommodation space flow channel maybe provided connecting the accommodation space, the discharge portion, and the supply portion. Preferably, a fan is provided to the accommodation space flow channel and configured to discharge the air from the accommodation space to the outside of the cabinet. The shutoff portion may be configured to allow flow of air between the cabinet flow channel and the supply portion based on the fan operation. For instance, when the operation of the fan has stopped, the shutoff portion may be configured to prevent the flow of air between the supply portion and the cabinet flow channel while allowing flow of air between the discharge portion and the cabinet flow channel.

Preferably, the shutoff portion is provided in a down stream portion of the accommodation space flow channel at a location guiding air having passed through the fan toward the exterior of the cabinet.

Moreover, a pressure reduction portion may be provided in an upper stream portion of the accommodation space flow channel at a location guiding air to the fan. The pressure reduction portion may be configured to discharge the air from the accommodation space into the cabinet based on a pressure in the accommodation space becoming equal to or higher than a predetermined reference pressure.

The cabinet may further comprise an introduction port communicating with the accommodation space and a door provided to the cabinet and configured to open and close the introduction port. Here, the pressure reduction portion may be configured to allow the accommodation space flow channel to communicate with the interior of the cabinet based on a pressure in the accommodation space that is less than a pressure in the accommodation space needed to overcome a force by which the door is fastened to the cabinet and open the door.
The cabinet flow channel may include a cabinet flow inlet or cabinet inlet port penetrating the cabinet. Preferably, the cabinet flow inlet does not overlap with a projection of the pressure reduction portion onto the cabinet. That is, the cabinet flow inlet is provided separately from a projection of the pressure reduction portion onto the cabinet. By these means, air discharged from the pressure reduction portion is not discharged from the cabinet through the cabinet flow inlet.

It is to be understood that both the foregoing general description and the following detailed description are exemplary and explanatory and are intended to provide further explanation of the subject matter claimed.

### BRIEF DESCRIPTION OF THE DRAWINGS

FIG. 1 is a view illustrating an example laundry treating apparatus;
FIG. 2 is a view illustrating an example pressure reduction portion (e.g., an example supply portion opening/closing device);
FIG. 3 is a view illustrating an example positional relationship between the pressure reduction portion and a cabinet discharge port provided to the rear panel of the cabinet;
FIG. 4 is a view illustrating another example laundry treating apparatus;
FIGs. 5 and 6 are views illustrating an example pressure reduction portion (e.g., an example discharge portion opening/closing device);
FIG. 7 is a view illustrating yet another example laundry treating apparatus;
FIG. 8 is a view illustrating an example shutoff portion (e.g., an example explosion prevention portion) provided to a laundry treating apparatus; and
FIG. 9 is a view illustrating an example of the laundry treating apparatus provided with both the pressure reduction portion and the shutoff portion.

### DETAILED DESCRIPTION

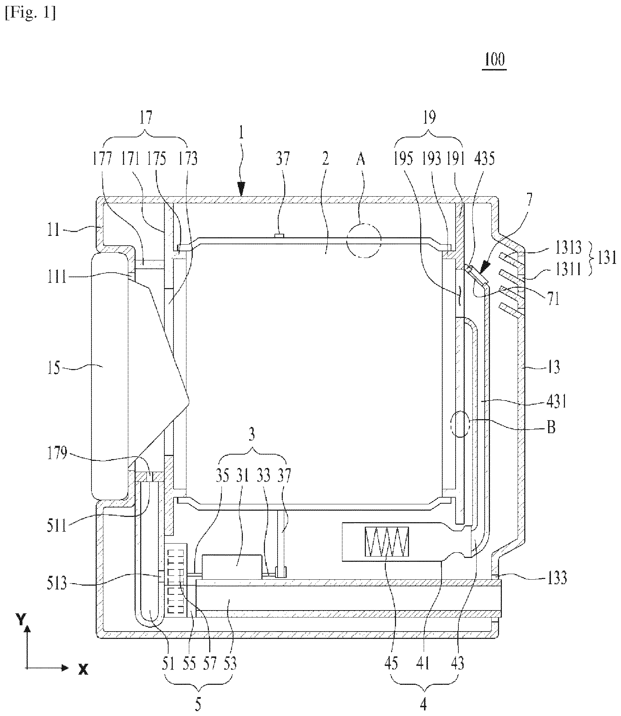

FIG. 1 illustrates an example laundry treating apparatus 100. The laundry treating apparatus 100 includes a cabinet 1 defining an external appearance of the laundry treating apparatus, an accommodation space provided in the cabinet 1 to accommodate laundry, a supply portion 4 to supply air to the accommodation space, and a discharge portion 5 to discharge air in the accommodation space from the cabinet 1.

The cabinet 1 may include a front panel 11 provided with an introduction port 111 for introduction and retrieval of laundry, and a rear panel 13 provided with a cabinet inlet port 131 allowing the interior of the cabinet 1 to communicate with the exterior of the cabinet 1.

The front panel 11 is provided with a door 15 to open and close the introduction port 111. Accordingly, a user may introduce the laundry into or retrieve the same from the accommodation space through the door 15 and the introduction port 111.

The rear panel 13 is arranged to face the front panel 11 of the cabinet 1 provided with the door 15. The cabinet inlet port 131 allows air outside of the cabinet 1 to flow into the cabinet.

That is, the cabinet inlet port 131 is a flow channel (e.g., a cabinet flow channel) allowing air outside of the cabinet to flow into the cabinet therethrough.

The cabinet inlet port 131 may be provided with a plurality of panel through holes 1311 formed to penetrate the rear panel 13 in the width direction of the cabinet 1 (the direction of Z axis), and a flange 1313 extending from the lower surface of each of the panel through holes toward the interior of the cabinet 1 to be inclined.

The flanges 1313 reduce (e.g., prevent) water outside of the cabinet 1 from flowing into the cabinet 1 through the panel through holes 1311. Accordingly, when the indoor space where the laundry treating apparatus 100 is installed is cleaned, it may be possible to minimize introduction of water into the cabinet 1.

In addition, the rear panel 13 may be further provided with a cabinet discharge port 133 to discharge air moving through the discharge portion 5 from the cabinet 1.

In the case that the laundry treating apparatus 100 is only intended to dry the laundry, the accommodation space may be provided with a drum 2 rotatably arranged in the cabinet 1.

The drum 2 may be formed in a cylindrical shape having an open front and open back. In this case, the cabinet 1 may be further provided therein with a front support 17 and a rear support 19 which support the drum 2 such that the drum 2 is rotatable.

The front support 17 may be provided with a support body 171 fixed to the interior of the cabinet 1, a body through hole 173 provided to penetrate the support body 171, and a front flange 175 provided to the support body 171 to support the front of the drum 2.

The body through hole 173 is arranged to communicate with the introduction port 111, and accordingly the laundry introduced through the introduction port 111 may be moved into the drum 2 through the body through hole 173.

The support body 171 may be provided with a guide duct 177 having a cylindrical shape and extending toward the door 15. In this case, the guide duct 177 may be arranged to connect the front panel 11 to the support body 171 to surround the circumferential surface of the body through hole 173 and the circumferential surface of the introduction port 111.

The front flange 175 may be formed to protrude from the surface of the support body 171 toward the drum 2, along the circumferential surface of the body through hole 173. The inner circumferential surface of the front of the drum 2 is rotatably supported by the outer circumferential surface of the front flange 175.

The front support 17 is further provided with a discharge portion connection hole 179 coupled to the discharge portion 5, which will be described in more detail later. The discharge portion connection hole 179 is arranged to penetrate the guide duct 177. The discharge portion connection hole 179 allows the interior of the drum 2 to communicate with the exterior of the drum 2 therethrough.

The rear support 19 may be provided with a support body 191 fixed to the interior of the cabinet 1, and a rear flange 193 provided to the support body 191 to support the back of the drum 2 such that the drum 2 is rotatable.

The rear support 19 is further provided with a supply portion connection hole 195 coupled to the supply portion 4, which will be described in more detail later. The supply portion connection hole 195 is formed to penetrate the support body 191. The supply portion connection hole 195 allows the interior of the drum 2 to communicate with the exterior of the drum 2.

In the case that the laundry treating apparatus 100 is formed to perform drying and washing the laundry, the accommodation space may be provided with a tub arranged in the cabinet 1 to contain washing water, and a drum 2 rotatably coupled to the interior of the tub.

In this case, the front support and the rear support may be omitted. In addition, the body through hole 173, the guide duct 177 and the discharge portion connection hole 179 are provided to the front of the tub, which is cylindrically shaped. The supply portion connection hole 195 may be provided to the outer circumferential surface of the tub, and the drum 2 may be rotatably supported in the tub by a rotating shaft that penetrates the back of the tub. In addition, the circumferential surface of the drum may be provided with a plurality of through holes allowing the tub to communicate with the interior of the drum therethrough.

Hereinafter, a description will be given of the laundry treating apparatus 100 which only functions to dry laundry, as an example. However, features of this example may be applied to other types of laundry treating apparatus.

The drum 2 is rotated by a drive unit 3. As shown, the drive unit 3 may include a drum motor 31 provided in the cabinet 1, a first rotating shaft 33 and a second rotating shaft 35, which are rotated by the drum motor 31, and a belt 37 to connect the circumferential surface of the drum 2 to the first rotating shaft 33.

The second rotating shaft 35 is connected to an exhaust fan 57 through a fan housing 55 provided to the discharge portion 5. Accordingly, in the illustrated example, the drum 2 and the exhaust fan 57 may be rotated at the same time using one drum motor 31.

The supply portion 4 is a supply flow channel through which air (e.g., hot air or unheated air) is supplied to the drum 2. Accordingly, the supply portion 4 may be composed of a supply duct 43 through which air is supplied to the drum 2.

In this case, the supply duct 43 may be arranged to supply air from inside the cabinet 1 into the drum 2, or to supply air from outside of the cabinet 1 into the drum 2.

In the case that the supply portion 4 is provided to supply heated air (e.g., hot air) to the drum 2, the supply portion 4 may include a heating duct 41 provided with a heater 45 to heat air and a supply duct 43 to guide the air discharged from the heating duct 41 to the drum 2.

In this case, the heating duct 41 may be formed in the shape of a column having open opposite sides facing each other and positioned in the cabinet 1. In addition, the supply duct 43 may include a duct body 431 to connect the heating duct 41 with the supply portion connection hole 195.

In the case that the heating duct 41 is arranged in a space between the drum 2 and the bottom surface of the cabinet 1 or in a space between the lateral surface of the drum 2 and the cabinet 1, the duct body 431 may extend from the heating duct 41 along the height of the cabinet 1 (e.g., the height of the drum 2).

Further, the duct body 431 coupled to the supply portion connection hole 195 may be provided with a mount surface 435 (inclined surface) parallel with or inclined toward the bottom surface of the cabinet 1.

The discharge portion 5 is a discharge flow channel through which air in the drum 2 is discharged from the cabinet 1 (a discharge flow channel through which air in the drum 2 is discharged to an outside of the cabinet 1). Accordingly, the discharge portion 5 may include a connection duct 51 through which the air in the drum 2 is discharged, and an exhaust duct 53 to guide the air introduced into the connection duct 51 to the outside of the cabinet 1.

The connection duct 51 and the exhaust duct 53 are connected to each other through the fan housing 55. The fan housing 55 is provided with an exhaust fan 57 to move the air in the drum 2 into the connection duct 51.

The connection duct 51 includes a duct inlet port 511 and a duct discharge port 513. The duct inlet port 511 is coupled to the discharge portion connection hole 179 provided in the front support 17.

The fan housing 55 provides a space in which the exhaust fan 57 is rotatable and connects the duct discharge port 513 to the exhaust duct 53.

Accordingly, when the exhaust fan 57 is rotated in the fan housing 55 by the second rotating shaft 35 provided to the drum motor 31, the air in the drum 2 may be introduced into the connection duct 51 through the discharge portion connection hole 179 and the duct inlet port 511, and the air in the connection duct 51 may be moved to the exhaust duct 53 through the duct discharge port 513 and the fan housing 55.

Once the air in the drum 2 is discharged from the cabinet by the exhaust fan 57, the pressure in the drum 2 is lowered, and therefore the air in the cabinet 1 may be moved into the drum 2 through the supply portion 4.

With this configuration, external air may be continuously supplied into the cabinet 1 through the cabinet flow channel, which is formed by the cabinet inlet port 131, and when the heater 45 operates during movement of air into the drum 2 through the supply portion 4, the laundry treating apparatus 100 may supply hot air to the drum 2.

That is, in the illustrated example, the drum 2, the discharge flow channels 51 and 53, and the supply flow channels 41 and 43 are connected to each other to form a single flow channel (one flow channel unit). Accordingly, when the air in the drum 2 is discharged from the cabinet 1 through the exhaust fan 57, air flow is created between the flow channel unit and the cabinet flow channel, and thus air may be continuously supplied to the drum 2. Therefore, the laundry treating apparatus according to the illustrated example does not supply air to the drum 2 unless the exhaust fan 57 operates.

In some circumstances, the laundry treating apparatus 100 configured as above may encounter the following problems when fire breaks out in the laundry stored in the drum 2.

In the case that fire breaks out in the laundry in the drum 2 (the cause of which is not clear), flames in the drum 2 may be discharged from the cabinet 1, and thereby the room where the laundry treating apparatus 100 is installed may catch fire.

In the case that the laundry burns in the drum 2 for a long time, flammable gas produced during burning of the laundry may cause flash over, or backdraft may occur when more than a certain amount of air is suddenly supplied into the drum 2. Accordingly, when explosion occurs in the drum 2, the door may be opened by the pressure of the explosion and thereby the flames in the drum 2 may be discharged from the cabinet 1.

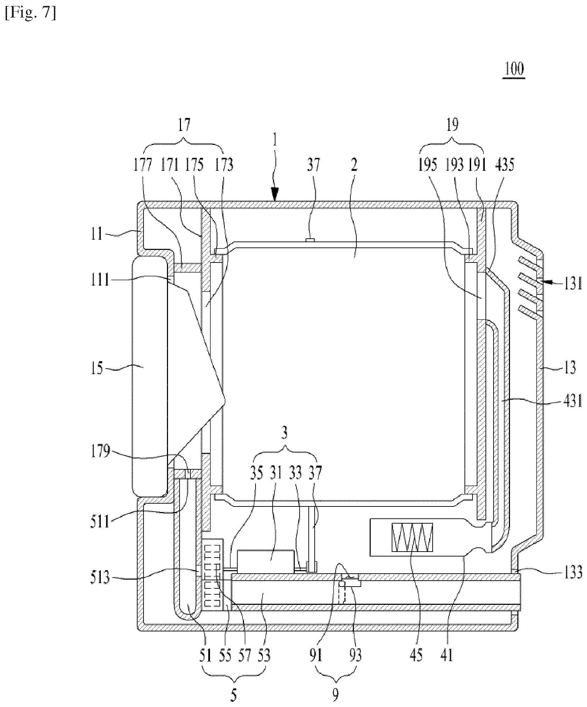

Therefore, in some implementations, the laundry treating apparatus 100 further includes at least one of a shutoff portion 9 (FIG. 7) to prevent explosion by blocking supply of air to the drum 2 (naturally extinguishing flames), and a pressure reduction portion 7 to prevent discharge of flames from the drum 2 to the outside of the cabinet 1 due to pressure produced when explosion occurs in the drum 2.

Hereinafter, a description will be given of the pressure reduction portion 7 and then of a shutoff portion 9.

In the case that explosion occurs in the drum 2, the pressure reduction portion 7 discharges the air in the drum 2 not from the cabinet 1 but into the cabinet 1 such that flames are prevented from being discharged from the cabinet 1.

When explosion (e.g., flash over or backdraft) occurs in the drum 2, the pressure in the drum 2 drastically increases. When pressure increases in the drum 2, a member to seal the drum 2 (such as the door 15) with relatively weak force is damaged or opened, and thereby flames in the drum 2 may be discharged from the cabinet 1.

Accordingly, the pressure reduction portion 7 is provided to prevent the flames from being discharged from the cabinet 1 due to explosion by discharging the air in the drum 2 into the cabinet 1 (by decreasing the pressure in the drum) in the case that explosion occurs in the drum 2 in spite of presence of the shutoff portion 9.

To this end, the pressure reduction portion 7 may be provided in the upper stream of the flow channel unit, which guides air to the exhaust fan 57, to discharge the air in the drum 2 into the cabinet 1 when pressure in the drum 2 is equal to or higher than a predetermined reference pressure.

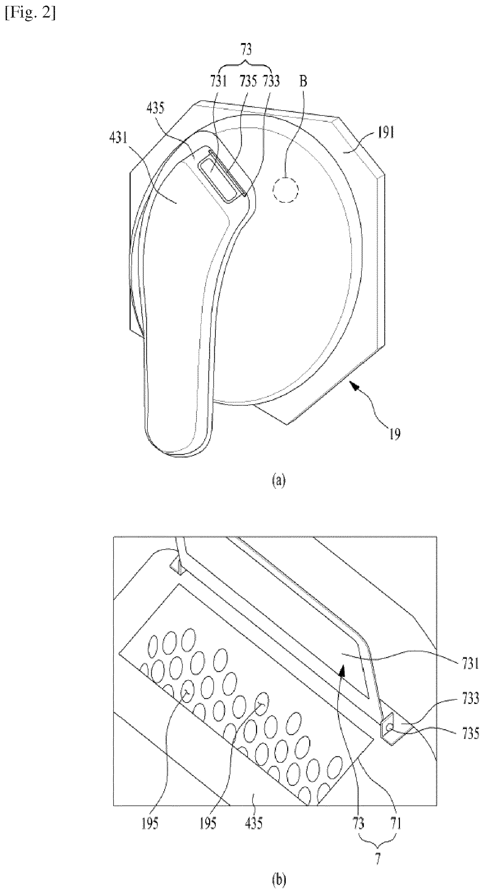

More specifically, referring to FIGS. 1 and 2, the pressure reduction portion 7 may be provided with an opening/closing device 71 and 73 (a supply portion opening/closing device) provided to the supply portion 4 to move the air in the drum 2 into the cabinet 1 when the pressure in the drum 2 is equal to or higher than a predetermined reference pressure.

The reference pressure may be set to a pressure in the drum expected to be produced when explosion occurs in the drum 2 (an experimental value). The reference pressure may be set to (or slightly lower than) a pressure which releases fastening between the door 15 and the cabinet 1 (e.g., a pressure capable of forcing the door open).

The reference pressure may be set to a pressure which overcomes the force by which the door 15 is fastened to the cabinet 1. This is because the door 15, among the structures allowing the interior of the drum to communicate with the exterior of the drum therethrough (e.g., the structures allowing the flow channel unit to communicate with the exterior of the cabinet therethrough), is openable with the smallest force.

In addition, the supply portion opening/closing device may be provided with a supply duct exhaust hole 71 provided to the supply duct 43 to allow the interior of a supply duct 43 to communicate with the interior of the cabinet 1 therethrough, and a supply duct door (a supply duct flap) 73 rotatably provided to the supply duct 41 to open the supply duct exhaust hole 71 when the pressure in the drum 2 is equal to or higher than the reference pressure.

In the case that the reference pressure is set to a pressure equal to or higher than the pressure to open the door 15, the self-weight of the supply duct door 73 may be equal to or lower than the force that fastens the door 15 and the cabinet 1 to each other. This is intended to cause the supply duct door 73 to be opened earlier than the door 15 when explosion occurs in the drum 2.

The supply duct door 73 may be arranged such that the supply duct exhaust hole 71 is closed by self-weight of the supply duct door 73. In other examples, the supply duct door 73 may be arranged such that the supply duct exhaust hole 71 is opened by a controlling device, such as a controller. However, closure based on self-weight may be used in addition or as an alternative to closure by a controller because electronic components equipped in the laundry treating apparatus 100 may malfunction when fire or explosion breaks out in the drum 2.

Further, the supply portion opening/closing device 71 and 73 may be provided at any location on the supply portion 4. For example, the supply portion opening/closing device 71 and 73 may be provided at the supply duct 43 adjacent to the supply portion connection hole 195. This location is intended to allow the air in the drum 2 to be discharged into the cabinet 1 when explosion occurs in the drum 2.

That is, the supply portion opening/closing device 71 and 73 may be provided on the surface of the duct body 431 facing the rear panel 13, or on the mount surface 435 provided at the upper portion of the duct body 431.

In the case that the supply portion opening/closing device 71 and 73 is provided on the surface of the duct body 431 facing the rear panel 13, a space is provided to prevent the rear panel 13 and the supply duct door 73 from interfering with each other when the supply duct door 73 is opened between the duct body 431 and the rear panel 13.

In addition, in the case that the supply portion opening/closing device 71 and 73 is provided on the surface of the duct body 431 facing the rear panel 13, the supply duct exhaust hole 71 may not be completely sealed solely by the self-weight of the supply duct door 73, and noise may be caused during operation of the laundry treating apparatus.

Therefore, the length of the laundry treating apparatus 100 in the depth direction (i.e., the X-axis direction) may be minimized and the supply portion opening/closing device 71 and 73 may be provided on the mount surface 435 to seal the supply duct exhaust hole 71.

As described above, the mount surface 435 may be arranged parallel with the bottom surface of the cabinet 1 or arranged inclined at a predetermined inclination angle from the supply portion connection hole 195 toward the bottom surface of the cabinet 1.

When the mount surface 435 is arranged inclined with respect to the bottom surface of the cabinet 1, rather than parallel with the bottom surface of the cabinet 1, the supply duct door 73 may be promptly opened and the supply duct exhaust hole 71 may be closed by self-weight of the supply duct door 73 when explosion occurs in the drum 2.

Hereinafter, a description will be given of the case in which the supply portion opening/closing device 71 and 73 is provided on the mount surface 435 arranged to be inclined.

As shown in FIG. 2, the supply duct exhaust hole 71 of the supply portion opening/closing device is arranged to penetrate the mount surface 435 to allow the interior of the duct body 431 to communicate with the interior of the cabinet 1 therethrough.

In this case, the supply duct door 73 may be provided with a body 731 (first body) to open and close the supply duct exhaust hole 71, a body support 733 (first body support) provided on the mount surface 435, and a rotating shaft 735 to couple the first body 731 to the first body support 733 such that the first body 731 is rotatable.

In the illustrated example of the laundry treating apparatus 100, when the air in the drum 2 is discharged from the cabinet 1 by the discharge portion 5, a negative pressure is formed in the drum 2, and thereby the air in the cabinet 1 is supplied to the drum 2 through the supply portion 4.

Accordingly, when the laundry treating apparatus 100 normally operates (e.g., when the exhaust fan 57 normally operates), a negative pressure is formed in the supply duct 43, and therefore the supply duct door 73 will not open the supply duct exhaust hole 71 so long as explosion does not occur in the drum 2 (e.g., so long as the pressure in the drum does not become equal to or higher than a reference pressure).

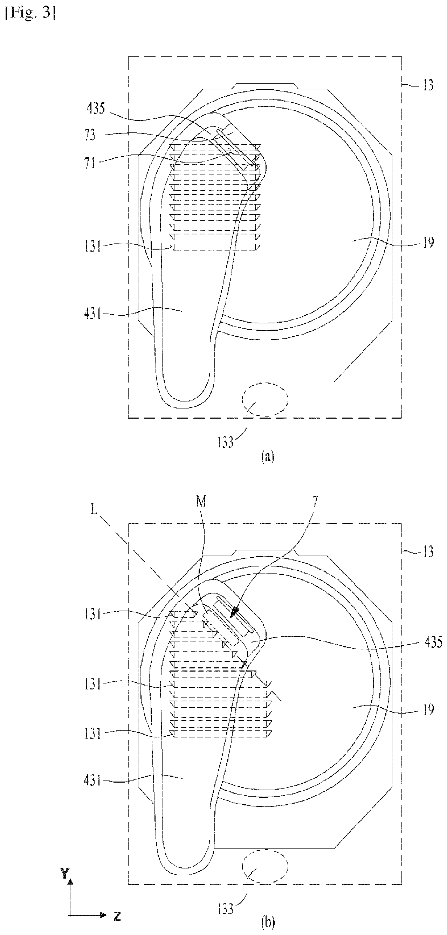

In the case that the cabinet inlet port 131 is provided to the rear panel 13 to supply air into the cabinet 1 as shown in FIG. 3(a), flames in the drum 2 may be discharged from the cabinet 1 in spite of the presence of the supply portion opening/closing device 71 and 73.

That is, in the case that the cabinet inlet port 131 is arranged in the width direction of the cabinet (the Z-axis direction) such that the cabinet inlet port 131 penetrates the projection plane M of the supply duct exhaust hole 71 projected on the rear panel 13, flames produced by explosion in the drum 2 may be disposed from the cabinet 1 via the supply duct exhaust hole 71 and the cabinet inlet port 131.

Accordingly, as shown in FIG. 3(b), the cabinet inlet port 131 may be arranged not to interfere with the projection plane M of the supply duct exhaust hole 71 projected on the rear panel 13.

The cabinet inlet port 131 may be provided to the rear panel 13 in an inclined manner L to be parallel with the lower portion of the projection plane M. In this case, however, it is possible that water outside of the cabinet is introduced into the cabinet through the cabinet inlet port 131.

Therefore, the cabinet inlet port 131 may be arranged on the rear panel 13 to be parallel with the bottom surface of the cabinet 1 but not to interfere with the projection plane M, as shown in FIG. 3(b).

In the illustrated example, the supply portion opening/closing device 71 and 73 is provided to the supply portion 4. This is simply an example, and the present disclosure is not limited thereto. The supply portion opening/closing device 71 and 73 may be provided at various locations so long as the air in the drum 2 is allowed to be discharged into the cabinet 1 when the pressure in the drum 2 is equal to or higher than the reference pressure.

That is, the supply portion opening/closing device 71 may be provided on the circumferential surface A (see FIG. 1) of the drum 2, or on at least one B of surfaces of the front support 17 and the rear support 19 (see FIG. 1).

The laundry treating apparatus 100 configured as described above may prevent flames in the drum 2 from being discharged from the cabinet 1 when pressure in the drum 2 becomes equal to or higher than the reference pressure due to explosion, as the supply duct door 73 opens the supply duct exhaust hole 71 before the door 15 opens the introduction port 111.

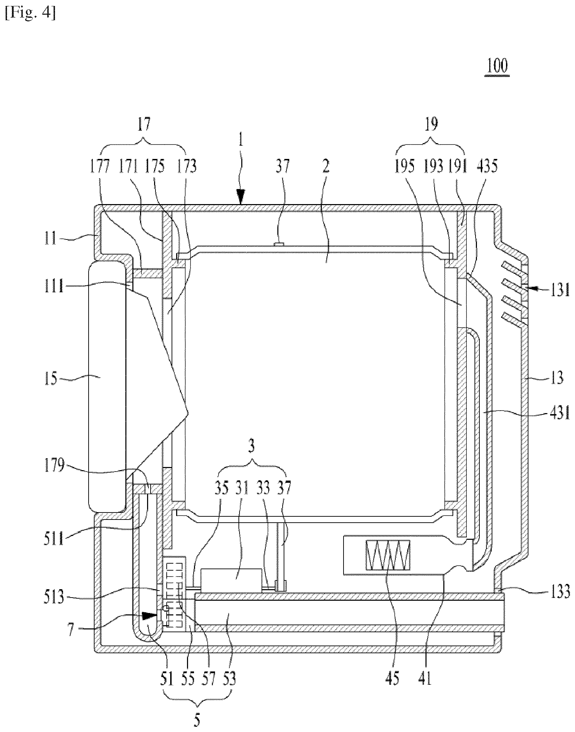

FIG. 4 illustrates an example laundry treating apparatus 100. In this example, the pressure reduction portion 7 is provided with a discharge portion opening/closing device arranged at the discharge portion 5 to discharge the air in the drum into the cabinet 1 when the pressure in the drum is equal or higher than the reference pressure.

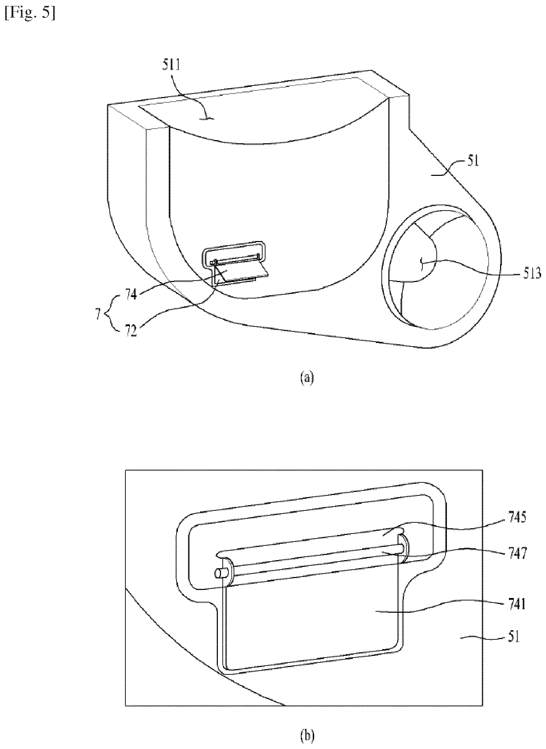

The discharge portion opening/closing device may be provided at any location at the discharge portion 5 so long as the air introduced from the drum 2 into the discharge portion 5 is supplied into the cabinet 1. For instance, the discharge portion opening/closing device may be provided to the connection duct 51, as shown in FIG. 5.

Among the parts of the discharge portion 5, the connection duct 51 is closest to the drum 2. Accordingly, in the case that the discharge portion opening/closing device 72 and 74 is provided to the connection duct 51, the pressure in the drum 2 may be quickly lowered when explosion occurs in the drum 2.

As shown in FIG. 5, the discharge portion opening/closing device may be provided with a connection duct exhaust hole 72 arranged to penetrate the connection duct 51, and a connection duct door (a connection duct flap) 74 rotatably arranged at the connection duct to open and close the connection duct exhaust hole 72.

The connection duct door 74 may be provided with a body 741 (second body) to close the connection duct exhaust hole 72 due to gravity, a second body support 745 fixed to the connection duct 51, and a rotating shaft 747 to connect the second body 741 with the second body support 745.

Similar to the self-weight of the supply duct door 73 (the self-weight of the first body 731), the self-weight of the connection duct door 74 (the self-weight of the second body 741) may be less than the force by which the door 15 and the cabinet 1 are fastened to each other.

Since the discharge portion opening/closing device 72 and 74 is positioned between the drum 2 and the exhaust fan 57, negative pressure is formed in the connection duct 51 when the air in the drum 2 is discharged by the exhaust fan 57. Accordingly, the connection duct door 74 does not open the connection duct exhaust hole 72, unless the pressure in the drum 2 becomes equal to or higher than a reference pressure.

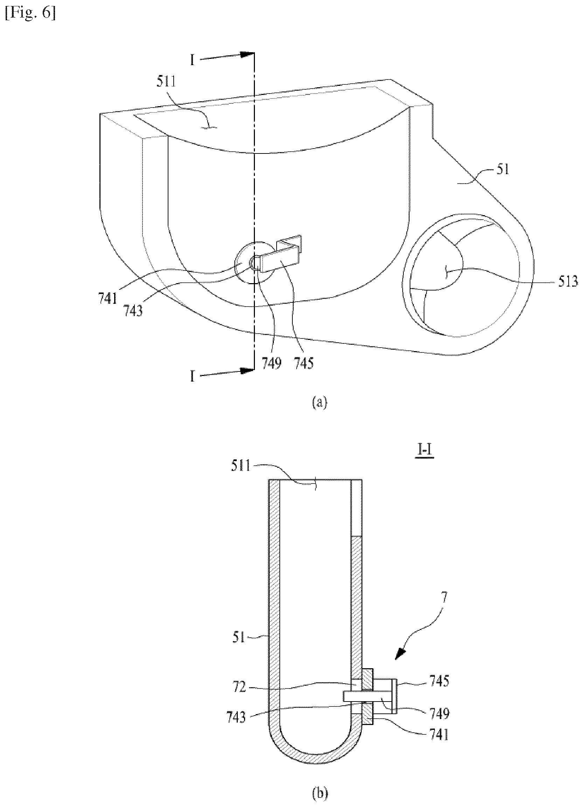

In some implementations, the discharge portion opening/closing device may be configured as shown in FIG. 6.

In this example, the discharge portion opening/closing device is configured such that a guider 749 provided to the second body support 745 guides movement of the second body 741.

To this end, the second body support 745 may be provided with a fixed end fixed to the connection duct 51, and an extended end extending from the fixed end toward the center of the second body 741 and spaced at a predetermined distance from the second body 741.

In this case, a body penetrating hole 743 to penetrate the center of the second body 741 may be provided in the second body 741, and the guider 749 may extend from the extended end toward the connection duct exhaust hole 72 to be inserted into the body penetrating hole 743.

The configuration of the discharge portion opening/closing device 72 and 74 described above and shown in FIG. 6 may also be applied to the supply portion opening/closing device 71 and 73.

The discharge portion opening/closing device 72 and 74 shown in FIGs. 5 and 6 is adapted to lower the pressure in the drum 2, but it may not fulfill the purpose in the case that explosion occurs in the drum 2 with the laundry clogging the discharge portion connection hole 179 (e.g., with the duct inlet port 511 closed).

Therefore, the discharge portion opening/closing device 72 and 74 may be provided, along with the opening/closing device 71 and 73, to the supply portion 4.

In the example shown in FIG. 7, the shutoff portion 9 is provided to block supply of air into the drum 2 when fire breaks out in the drum 2 such that flames in the drum 2 are naturally extinguished.
That is, when the exhaust fan 57 operates and the flap 93 of the shutoff portion 9 closes the hole 91, a flow of air between the cabinet flow channel (defined by the cabinet inlet port 131) and the supply flow channels 41 and 43 is generated and the drum 2 is in communication with the exterior of the cabinet 1. When the exhaust fan 57 does not operate and the flap 93 opens the hole 91, so that a part of the discharge channel 53 communicates with the inside and the outside of the cabinet 1, an air flow between the supply flow channels 41 and 43 and the part of the discharge channel 53 that communicates with the outside of the cabinet 1 is possible. In other words, when the exhaust fan 57 does not operate the shutoff portion 9 prevents flow of air between the supply flow channels 41 and 43 and the cabinet flow channel 131, but allows flow of air between the discharge channels 53 that communicates with the outside of the cabinet 1 and the cabinet flow channel 131. Thereby, when fire breaks out in the drum 2, likelihood of explosion of the drum 2 may be reduced.

The shutoff portion 9 may be provided at any location in the laundry treating apparatus 100 so long as it is arranged in the down stream of the flow channel unit 41, 43, 2, 51 and 53 which guides the air having passed through the exhaust fan 57 to the outside of the cabinet 1. FIG. 7 shows an example of the shutoff portion 9 provided at the discharge portion 5.

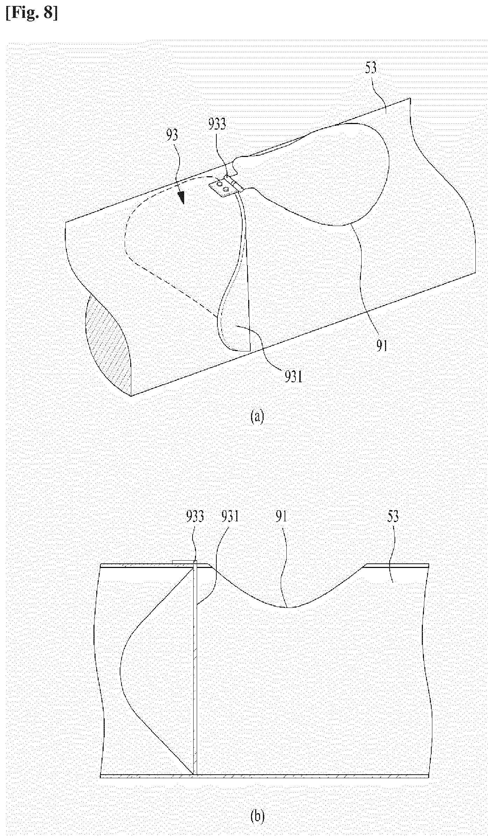

As shown in FIG. 8, the shutoff portion 9 may be provided with an exhaust duct penetrating hole 91 arranged to penetrate the exhaust duct 53 to allow the interior of the exhaust duct 53 to communicate with the interior of the cabinet 1, and a penetrating hole door (a penetrating hole flap) 93 rotatably provided to the exhaust duct 53 to selectively open the exhaust duct penetrating hole 91 and the exhaust duct 53 (e.g., to open one of the exhaust duct penetrating hole and the exhaust duct).

The penetrating hole door 93 may be provided with a body rotation shaft 933 provided to the exhaust duct 53, and a body 931 to selectively open the exhaust duct penetrating hole 91 and the exhaust duct 53 by rotating about the body rotation shaft 933 in the exhaust duct 53.

The body 931 may be configured such that the exhaust duct penetrating hole 91 is opened and closed by a controller. Also, the body 931 may be configured such that the exhaust duct 53 is closed by the self-weight of the body 931 and the exhaust duct penetrating hole 91 is closed by the exhaust fan 57.

This configuration is intended to enable the shutoff portion 9 to operate in the case that electronic devices malfunction due to fire breaking out in the drum 2.

In the illustrated example of the laundry treating apparatus 100, when the air in the drum 2 is discharged from the cabinet 1 by the exhaust fan 57, a negative pressure is formed in the drum 2, and thereby the air in the cabinet 1 is supplied to the drum 2 through the supply portion 4. Accordingly, when the exhaust fan 57 does not operate, little air is supplied into the drum 2.

However, since the exhaust duct 53 provided to the laundry treating apparatus 100 is exposed to the outside of the cabinet 1, air may be supplied into the drum 2 depending on change in atmospheric pressure outside of the laundry treating apparatus 100 even when the exhaust fan 57 does not operate.

That is, in the case of a typical laundry treating apparatus 100, the exhaust duct 53 is connected to a flow channel arranged through the wall of the house to discharge air discharged from the drum 2 to the outdoors during drying of the laundry. Therefore, depending on a change in the outdoor atmospheric pressure, the outdoor air may be supplied into the drum 2 through the exhaust duct 53, or the air in the drum 2 may be discharged to the outdoor through the exhaust duct 5.

This is the same as the case in which the laundry treating apparatus 100 is installed indoors. Depending on change in the indoor atmospheric pressure, air may be supplied into the drum 2 through the exhaust duct 53, or air may be discharged from the drum 2.

In short, simply stopping the exhaust fan 57 when fire breaks out in the drum 2 may not block supply of air into the drum 2.

The shutoff portion 9 is intended to prevent explosion in the drum 2 due to supply of air into the drum 2 when operation of the exhaust fan 57 has been stopped.

Suppose that operation of the exhaust fan 57 has been stopped due to occurrence of explosion in the drum 2 and the atmospheric pressure outside of the laundry treating apparatus 100 is lower.

As shown in FIG. 7, when operation of the exhaust fan 57 is stopped, the exhaust duct penetrating hole 91 is opened and the exhaust duct 53 is closed by the penetrating hole door 93. Accordingly, the air in the drum 2 is not discharged from the cabinet 1 through the exhaust duct 53 even if the atmospheric pressure outside of the cabinet 1 is low.

If the air in the drum 2 is not discharged from the cabinet 1, the air in the cabinet 1 will not be supplied to the drum 2 through the supply portion 4 (flow of air between the supply flow channels 41 and 43 and the cabinet flow channel 131 will be blocked). Therefore, flames in the drum 2 will be extinguished when all of the oxygen in the drum 2 is consumed.

Also, the air in the cabinet 1 will be discharged from the cabinet 1 through the exhaust duct penetrating hole 91 since the atmospheric pressure outside of the cabinet 1 is low (e.g., flow of air between the discharge flow channels 51, 53 and 55 and the cabinet flow channel 131 occurs).

When the air in the cabinet is discharged from the cabinet 1 through the exhaust duct penetrating hole 91, the air in the drum 2 is allowed to be discharged from the cabinet 1 through the supply portion 4. Therefore, the shutoff portion 9 may quickly extinguish the flames in the drum 2 when the atmospheric pressure outside of the cabinet 1 is low.

Next, suppose that operation of the exhaust fan 57 has been stopped due to occurrence of explosion in the drum 2 and the atmospheric pressure outside of the laundry treating apparatus 100 is high.

Since operation of the exhaust fan 57 has been stopped, the exhaust duct penetrating hole 91 is opened and the exhaust duct 53 is closed by the penetrating hole door 93. Accordingly, the air outside of the cabinet 1 is not supplied into the drum 2 through the exhaust duct 53 even if the atmospheric pressure outside of the cabinet 1 is high.

However, the air outside of the cabinet 1 may be introduced into the cabinet 1 through the exhaust duct 53 and the exhaust duct penetrating hole 91 since the atmospheric pressure outside of the cabinet 1 is high.

Through experimentation, however, even if the air outside of the cabinet 1 is introduced into the cabinet 1 through the exhaust duct penetrating hole 91 due to high atmospheric pressure outside of the cabinet 1, it is rarely possible that the air is supplied to the drum 2 through the supply portion 4.

This may be because the pressure in the drum 2 has been increased along with the increase of the amount of gas due to fire breaking out in the drum 2, although the amount of air in the drum 2 is reduced due to fire.

Therefore, the shutoff portion 9 may cause the flames in the drum 2 to be naturally extinguished by shutting off air supplied into the drum 2, even when the atmospheric pressure outside of the laundry treating apparatus 100 is high.

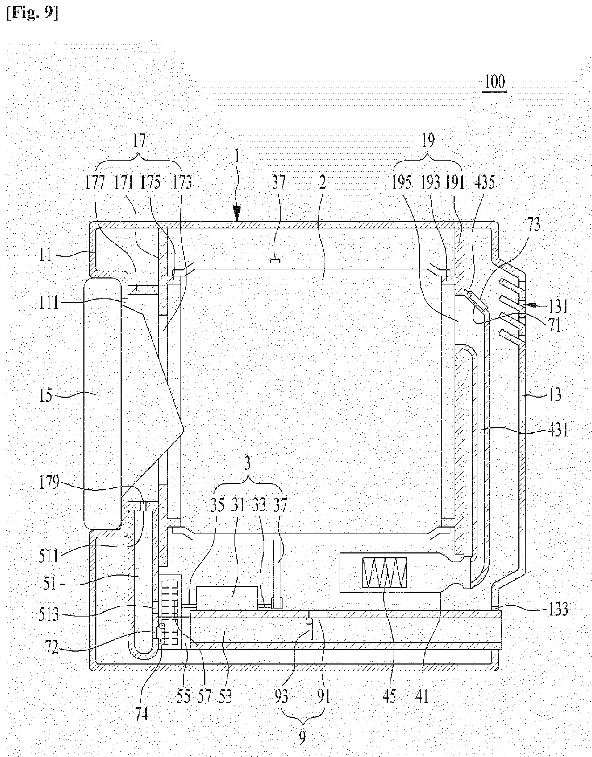

FIG. 9 illustrates an example laundry treating apparatus 100 provided with both the pressure reduction portion 7 and the shutoff portion 9.

In this example, the pressure reduction portion 7 is provided with an opening/closing device 71 and 73 (a supply portion opening/closing device) provided to the supply portion 4 and a discharge portion opening/closing device 72 and 74 provided to the discharge portion 5. However, the pressure reduction portion 7 may also be only provided with one of the opening/closing device 71 and 73 (a supply portion opening/closing device) provided to the
supply portion 4 and the discharge portion opening/closing device 72 and 74 provided to the discharge portion 5. The opening/closing device 71 and 73 and discharge portion opening/closing device 72 and 74 are adapted to discharge the air in the drum 2 into the cabinet 1 when the pressure in the drum 2 is equal to or higher than a reference pressure. The shutoff portion 9 is provided to the exhaust duct 53 to open the exhaust duct penetrating hole 91 and close the exhaust duct 53 when operation of the exhaust fan 57 is stopped.

The structures and effects of the opening/closing device 71 and 73, the discharge portion opening/closing device 72 and 74, and the shutoff portion 9 are the same as those described in the previous examples, and, thus, a detailed description thereof will be referenced, rather than repeated.

A laundry treating apparatus according to the present disclosure may allow flames in the accommodation space containing laundry to be naturally extinguished when fire breaks out in the accommodation space.

A laundry treating apparatus also may prevent explosion from occurring in the accommodation space containing laundry due to flammable gas when fire breaks out in the accommodation space.

Further, a laundry treating apparatus may prevent flames from being discharged from the accommodation space containing laundry when explosion occurs in the accommodation space.

It will be apparent to those skilled in the art that various modifications and variations can be made without departing from the scope of the disclosure. Thus, the present disclosure is intended to cover modifications and variations that come within the scope of the appended claims and their equivalents.

## Claims

1. A laundry treating apparatus (100) comprising:
a cabinet (1);
an accommodation space provided in the cabinet (1) and configured to receive laundry;
a discharge portion (5) allowing an interior of the accommodation space to communicate with an exterior of the cabinet (1) and adapted to discharge air from the accommodation space to the exterior of the cabinet (1);
a supply portion (4) that supplies air into the accommodation space when the air in the accommodation space is discharged through the discharge portion (5); and
a shutoff portion (9) positioned at the discharge portion (5) and adapted to open and close the discharge portion (5),
**characterized in that** in a closed configuration, the shutoff portion (9) is configured to close a part of the discharge portion (5) connected to the accommodation space for preventing the air in the accommodation space from being discharged from the cabinet (1) through the discharge portion (5) and to open a flow passage between the inside of the cabinet (1) and a part of the discharge portion (5) communicating with the exterior of the cabinet (1) for allowing air in the cabinet (1), but outside of the accommodation space, to be discharged from the cabinet (1).

2. The laundry treating apparatus (100) according to claim 1, wherein the shutoff portion (9) comprises:
a penetrating hole (91) provided to the discharge portion (5) to allow an interior of the discharge portion (5) to communicate with an interior of the cabinet (1); and
a penetrating hole flap (93) configured to open one of the penetrating hole (91) and a part of the discharge portion (5) connected to the accommodation space.

3. The laundry treating apparatus (100) according to any one of the preceding claims, wherein the discharge portion (5) comprises an exhaust fan (57) configured to introduce air from the accommodation space into the discharge portion (5),
wherein the shutoff portion (9) is configured to close a part of the discharge portion (5) connected to the accommodation space when an operation of the exhaust fan (57) has stopped.

4. The laundry treating apparatus (100) according to any one of the preceding claims, further comprising a pressure reduction portion (7) positioned in the cabinet (1) and configured to discharge air from the accommodation space into the cabinet (1) depending on a pressure in the accommodation space becoming equal to or higher than a predetermined reference pressure.

5. The laundry treating apparatus (100) according to claim 4, wherein the pressure reduction portion (7) comprises an opening and closing device (71, 72, 73, 74) provided to at least one of the accommodation space, the discharge portion (5) and the supply portion (4) and configured to open and allow air in the accommodation space to flow into the cabinet (1).

6. The laundry treating apparatus (100) according to claim 5, wherein the opening and closing device (71, 72, 73, 74) comprises:
an exhaust hole (71, 72) provided at the at least one of the accommodation space, the discharge portion (5) and the supply portion (4) so that an interior thereof communicates with the interior of the cabinet (1); and
a flap (73, 74) configured to open and close the exhaust hole (71, 72).

7. The laundry treating apparatus (100) according to claim 6, wherein the flap (73, 74) is rotatably provided and configured to close the exhaust hole (71, 72) based on a self-weight of the flap (73, 74).

8. The laundry treating apparatus (100) according to claim 6, wherein the flap (73, 74) comprises:
a body (741) configured to open and close the exhaust hole (71, 72);
a body support (745) spaced at a predetermined distance from the body (741); and
a guider (749) penetrating the body (741) to guide the movement of the body (741) and extending from the body support (745) toward the exhaust hole (71, 72).

9. The laundry treating apparatus (100) according to claim 6, 7 or 8, wherein the flap (73, 74) is configured such that a pressure in the accommodation space needed to overcome the self-weight of the flap (73, 74) for opening the flap (73, 74) is less than a pressure in the accommodation space needed to overcome a force by which the door is fastened to the cabinet for opening the door.

10. The laundry treating apparatus (100) according to any one of claims 5 to 9, further comprising:
a front support (17) provided in the cabinet (1) and supporting a front portion of the accommodation space, the front support (17) being provided with a discharge portion connection hole (179) for discharging air from the accommodation space into the discharge portion (5); and/or
a rear support (19) provided in the cabinet (1) and forming at least part of a rear surface of the accommodation space, the rear support (19) being provided with a supply portion connection hole (195) connected to the supply portion (4);
wherein the opening and closing device (71, 72, 73, 74) is provided to at least one of the front support (17) and the rear support (19).

11. The laundry treating apparatus (100) according to any one of claims 5 to 10, wherein the cabinet (1) includes a cabinet inlet port (131) allowing an interior of the cabinet (1) to communicate with an exterior of the cabinet (1) therethrough, and
wherein the cabinet inlet port (131) is provided separately from a projection of the pressure reduction portion (7) onto the cabinet (1) for preventing air discharged from the pressure reduction portion (7) to be discharged from the cabinet (1) through the cabinet inlet port (131).

12. The laundry treating apparatus (100) according to any one of the preceding claims, further comprising:
a fan (57) provided in an air flow path including the supply portion (4), the accommodation space and the discharge portion (5) and configured to discharge the air from the accommodation space to an exterior of the cabinet (1).

13. The laundry treating apparatus (100) according to claim 12, wherein the shutoff portion (9) is provided in a down stream portion of the air flow path at a location guiding air having passed through the fan (57) toward the exterior of the cabinet (1).

14. The laundry treating apparatus (100) according to claim 12 or 13, further comprising a pressure reduction portion (7) provided in an upper stream portion of the air flow path at a location guiding air to the fan (57), the pressure reduction portion (7) being configured to discharge the air from the accommodation space into the cabinet (1) depending on a pressure in the accommodation space.

## Patentansprüche

1. Wäschebehandlungsvorrichtung (100), die Folgendes umfasst:
ein Gehäuse (1);
einen Aufnahmeraum, der in dem Gehäuse (1) vorgesehen ist und konfiguriert ist, Wäsche aufzunehmen;
einen Abführabschnitt (5), damit ein Innenraum des Aufnahmeraums mit einer Au-ßenseite des Gehäuses (1) kommunizieren kann, und der ausgelegt ist, Luft aus dem Aufnahmeraum zu der Außenseite des Gehäuses (1) abzuführen;
einen Zufuhrabschnitt (4), der Luft in den Aufnahmeraum zuführt, wenn die Luft in dem Aufnahmeraum durch den Abführabschnitt (5) abgeführt wird; und
einen Absperrabschnitt (9), der bei dem Abführabschnitt (5) positioniert ist und ausgelegt ist, den Abführabschnitt (5) zu öffnen und zu schließen,
**dadurch gekennzeichnet, dass** in einer geschlossenen Konfiguration der Absperrabschnitt (9) konfiguriert ist, einen Teil des Abführabschnitts (5), der mit dem Aufnahmeraum verbunden ist, zu schließen, um zu verhindern, dass die Luft in den Aufnahmeraum durch den Abführabschnitt (5) aus dem Gehäuse (1) abgeführt wird, und einen Strömungsdurchgang zwischen der Innenseite des Gehäuses (1) und einem Teil der Abführabschnitts (5), der mit der Außenseite des Gehäuses (1) kommuniziert, zu öffnen, damit Luft in dem Gehäuse (1), jedoch außerhalb des Aufnahmeraums aus dem Gehäuse (1) abgeführt wird.

2. Wäschebehandlungsvorrichtung (100) nach Anspruch 1, wobei der Absperrabschnitt (9) Folgendes umfasst:
ein Durchgangsloch (91), das bei dem Abführabschnitt (5) vorgesehen ist, damit ein Innenraum des Abführabschnitts (5) mit einem Innenraum des Gehäuses (1) kommunizieren kann; und
eine Durchgangslochklappe (93), die konfiguriert ist, das Durchgangsloch (91) oder einen Teil des Abführabschnitts (5), der mit dem Aufnahmeraum verbunden ist, zu öffnen.

3. Wäschebehandlungsvorrichtung (100) nach einem der vorhergehenden Ansprüche, wobei der Abführabschnitt (5) ein Abluftgebläse (57) umfasst, das konfiguriert ist, Luft von dem Aufnahmeraum in den Abführabschnitt (5) einzuleiten,
wobei der Absperrabschnitt (9) konfiguriert ist, einen Teil des Abführabschnitts (5), der mit dem Aufnahmeraum verbunden ist, zu schließen, wenn ein Betrieb des Abluftgebläses (57) gestoppt wurde.

4. Wäschebehandlungsvorrichtung (100) nach einem der vorhergehenden Ansprüche, die ferner einen Druckminderungsabschnitt (7) umfasst, der in dem Gehäuse (1) positioniert ist und konfiguriert ist, abhängig davon, ob ein Druck in dem Aufnahmeraum gleich oder größer als ein vorgegebener Referenzdruck wird, Luft von dem Aufnahmeraum in das Gehäuse (1) abzuführen.

5. Wäschebehandlungsvorrichtung (100) nach Anspruch 4, wobei der Druckminderungsabschnitt (7) eine Öffhungs- und Schließvorrichtung (71, 72, 73, 74) umfasst, die bei dem Aufnahmeraum, dem Abführabschnitt (5) und/oder dem Zufuhrabschnitt (4) vorgesehen ist und konfiguriert ist, den Aufnahmeraum zu öffnen, damit Luft in dem Aufnahmeraum in das Gehäuse (1) strömen kann.

6. Wäschebehandlungsvorrichtung (100) nach Anspruch 5, wobei die Öffnungs- und Schließvorrichtung (71, 72, 73, 74) Folgendes umfasst:
ein Abluftloch (71, 72), das bei dem Aufnahmeraum, dem Abführabschnitt (5) und/oder dem Zufuhrabschnitt (4) so vorgesehen ist, dass ein Innenraum mit dem Innenraum des Gehäuses (1) kommuniziert; und
eine Klappe (73, 74), die konfiguriert ist, das Abluftloch (71, 72) zu öffnen und zu schließen.

7. Wäschebehandlungsvorrichtung (100) nach Anspruch 6, wobei die Klappe (73, 74) drehbar vorgesehen ist und konfiguriert ist, das Abluftloch (71, 72) aufgrund eines Eigengewichts der Klappe (73, 74) zu schließen.

8. Wäschebehandlungsvorrichtung (100) nach Anspruch 6, wobei die Klappe (73, 74) Folgendes umfasst:
einen Körper (741), der konfiguriert ist, das Abluftloch (71, 72) zu öffnen und zu schließen;
eine Körperhalterung (745), die mit einem vorgegebenen Abstand von dem Körper (741) beabstandet ist; und
ein Führungselement (749), das den Körper (741) durchdringt, um die Bewegung des Körpers (741) zu führen, und das sich von der Körperhalterung (745) zu dem Abluftloch (71, 72) erstreckt.

9. Wäschebehandlungsvorrichtung (100) nach Anspruch 6, 7 oder 8, wobei die Klappe (73, 74) so konfiguriert ist, dass ein Druck in dem Aufnahmeraum, der erforderlich ist, das Eigengewicht der Klappe (73, 74) zum Öffnen der Klappe (73, 74) zu überwinden, geringer als ein Druck in dem Aufnahmeraum ist, der erforderlich ist, eine Kraft, durch die die Tür an dem Gehäuse befestigt ist, zum Öffnen der Tür zu überwinden.

10. Wäschebehandlungsvorrichtung (100) nach einem der Ansprüche 5 bis 9, die ferner Folgendes umfasst:
eine vordere Halterung (17), die in dem Gehäuse (1) vorgesehen ist und einen vorderen Abschnitt des Aufnahmeraums hält, wobei die vordere Halterung (17) mit einem Abführabschnitt-Verbindungsloch (179) zum Abführen von Luft von dem Aufnahmeraum in den Abführabschnitt (5) versehen ist; und/oder
eine hintere Halterung (19), die in dem Gehäuse (1) vorgesehen ist und wenigstens einen Teil einer hinteren Oberfläche des Aufnahmeraums bildet, wobei die hintere Halterung (19) mit einem Zufuhrabschnitt-Verbindungsloch (195) versehen ist, das mit dem Zufuhrabschnitt (4) verbunden ist;
wobei die Öffhungs- und Schließvorrichtung (71, 72, 73, 74) bei der vorderen Halterung (17) und/oder der hinteren Halterung (19) vorgesehen ist.

11. Wäschebehandlungsvorrichtung (100) nach einem der Ansprüche 5 bis 10, wobei das Gehäuse (1) eine Gehäuseeinlassöffnung (131) umfasst, damit ein Innenraum des Gehäuses (1) mit einer Außenseite des Gehäuses (1) kommunizieren kann, und
wobei die Gehäuseeinlassöffnung (131) getrennt von einem Vorsprung des Druckminderungsabschnitts (7) an dem Gehäuse (1) vorgesehen ist, um zu verhindern, dass Luft, die aus dem Druckminderungsabschnitt (7) abgeführt wird, durch die Gehäuseeinlassöffnung (131) aus dem Gehäuse (1) abgeführt wird.

12. Wäschebehandlungsvorrichtung (100) nach einem der vorhergehenden Ansprüche, die ferner Folgendes umfasst:
ein Gebläse (57), das in einem Luftströmungspfad vorgesehen ist, der den Zufuhrabschnitt (4), den Aufnahmeraum und den Abführabschnitt (5) umfasst, und das konfiguriert ist, die Luft aus dem Aufnahmeraum zu einer Außenseite des Gehäuses (1) abzuführen.

13. Wäschebehandlungsvorrichtung (100) nach Anspruch 12, wobei der Absperrabschnitt (9) in einem stromabwärts gelegenen Abschnitt des Luftströmungspfads bei einer Position vorgesehen ist, die Luft, die durch das Gebläse (57) gelangt ist, zu der Außenseite des Gehäuses (1) leitet.

14. Wäschebehandlungsvorrichtung (100) nach Anspruch 12 oder 13, die ferner einen Druckminderungsabschnitt (7) umfasst, der in einem stromaufwärts gelegenen Abschnitt des Luftströmungspfads bei einer Position vorgesehen ist, die Luft zu dem Gebläse (57) leitet, wobei der Druckminderungsabschnitt (7) konfiguriert ist, die Luft abhängig von einem Druck in dem Aufnahmeraum aus dem Aufnahmeraum in das Gehäuse (1) abzuführen.

## Revendications

1. Appareil de traitement de linge (100) comprenant :
une armoire (1) ;
un espace de logement prévu dans l'armoire (1) et configuré pour recevoir du linge ;
une section d'évacuation (5) permettant à un intérieur de l'espace de logement de communiquer avec un extérieur de l'armoire (1) et adaptée pour évacuer de l'air depuis l'espace de logement vers l'extérieur de l'armoire (1) ;
une section d'alimentation (4) qui fournit de l'air dans l'espace de logement lorsque l'air dans l'espace de logement est évacué à travers la section d'évacuation (5) ; et
une section de fermeture (9) positionnée au niveau de la section d'évacuation (5) et adaptée pour ouvrir et fermer la section d'évacuation (5),
**caractérisé en ce que** dans une configuration fermée, la section de fermeture (9) est configurée pour fermer une partie de la section d'évacuation (5) connectée à l'espace de logement pour empêcher que l'air dans l'espace de logement soit évacué de l'armoire (1) à travers la section d'évacuation (5) et pour ouvrir un passage d'écoulement entre l'intérieur de l'armoire (1) et une partie de la section d'évacuation (5) communiquant avec l'extérieur de l'armoire (1) pour permettre que de l'air se trouvant dans l'armoire (1), mais à l'extérieur de l'espace de logement, soit évacué de l'armoire (1).

2. Appareil de traitement de linge (100) selon la revendication 1, dans lequel la section de fermeture (9) comprend :
un orifice de pénétration (91) prévu dans la section d'évacuation (5) pour permettre à un intérieur de la section d'évacuation (5) de communiquer avec un intérieur de l'armoire (1) ; et
un volet d'orifice de pénétration (93) prévu pour ouvrir soit l'orifice de pénétration (91) soit une partie de la section d'évacuation (5) connectée à l'espace de logement.

3. Appareil de traitement de linge (100) selon l'une quelconque des revendications précédentes, dans lequel la section d'évacuation (5) comprend un ventilateur d'échappement (57) configuré pour introduire de l'air depuis l'espace de logement jusque dans la section d'évacuation (5),
dans lequel la section de fermeture (9) est configurée pour fermer une partie de la section d'évacuation (5) connectée à l'espace de logement lorsqu'un fonctionnement du ventilateur d'échappement (57) s'est arrêté.

4. Appareil de traitement de linge (100) selon l'une quelconque des revendications précédentes, comprenant en outre une section de réduction de pression (7) positionnée dans l'armoire (1) et configurée pour évacuer de l'air depuis l'espace de logement jusque dans l'armoire (1) en fonction d'une pression dans l'espace de logement devenant égale ou supérieure à une pression de référence prédéterminée.

5. Appareil de traitement de linge (100) selon la revendication 4, dans lequel la section de réduction de pression (7) comprend un dispositif d'ouverture et de fermeture (71, 72, 73, 74) prévu pour au moins un des éléments parmi l'espace de logement, la section d'évacuation (5) et la section d'alimentation (4) et configuré pour ouvrir et permettre que de l'air dans l'espace de logement s'écoule jusque dans l'armoire (1).

6. Appareil de traitement de linge (100) selon la revendication 5, dans lequel le dispositif d'ouverture et de fermeture (71, 72, 73, 74) comprend :
un orifice d'échappement (71, 72) prévu sur au moins un des éléments parmi l'espace de logement, la section d'évacuation (5) et la section d'alimentation (4) de telle sorte qu'un intérieur de celui-ci communique avec l'intérieur de l'armoire (1) ; et
un volet (73, 74) configuré pour ouvrir et fermer l'orifice d'échappement (71, 72).

7. Appareil de traitement de linge (100) selon la revendication 6, dans lequel le volet (73, 74) est prévu rotatif et configuré pour fermer l'orifice d'échappement (71, 72) sur la base d'un propre poids du volet (73. 74).

8. Appareil de traitement de linge (100) selon la revendication 6, dans lequel le volet (73, 74) comprend :
un corps (741) configuré pour fermer et ouvrir l'orifice d'échappement (71, 72) ;
un support de corps (745) espacé à une distance prédéterminée du corps (741) ; et
un guide (749) pénétrant dans le corps (741) pour guider le mouvement du corps (741) et s'étendant depuis le support de corps (745) vers le l'orifice d'échappement (71, 72).

9. Appareil de traitement de linge (100) selon les revendications 6, 7 ou 8, dans lequel le volet (73, 74) est configuré de telle manière qu'une pression dans l'espace de logement nécessaire pour surmonter le propre poids du volet (73, 74) pour ouvrir le volet (73, 74) est inférieure à une pression dans l'espace de logement nécessaire pour surmonter une force par laquelle la porte qui est fixée à l'armoire, afin d'ouvrir la porte.

10. Appareil de traitement de linge (100) selon l'une quelconque des revendications 5 à 9, comprenant en outre :
un support avant (17) prévu dans l'armoire (1) et supportant une section avant de l'espace de logement, le support avant (17) étant pourvu d'un orifice de connexion (179) de la section d'évacuation pour évacuer de l'air depuis l'espace de logement jusque dans la section d'évacuation (5) et/ou
un support arrière (19) prévu dans l'armoire (1) et formant au moins une partie d'une surface arrière de l'espace de logement, le support arrière (19) étant pourvu d'un orifice de connexion de section d'alimentation (195) connecté à la section d'alimentation (4) ;
dans lequel le dispositif d'ouverture et de fermeture (71, 72, 73, 74) est prévu sur au moins un des supports avant (17) et arrière (19).

11. Appareil de traitement de linge (100) selon l'une quelconque des revendications 5 à 10, dans lequel l'armoire (1) inclut un trou d'entrée d'armoire (131) permettant à un intérieur de l'armoire (1) de communiquer avec un extérieur de l'armoire (1) à travers celui-ci, et
dans lequel le trou d'entrée d'armoire (131) est prévu séparément d'une projection de la section de réduction de pression (7) sur l'armoire (1) pour empêcher que de l'air évacué depuis la section de réduction de pression (7) soit évacué depuis l'armoire (1) à travers le trou d'entrée d'armoire (131).

12. Appareil de traitement de linge (100) selon l'une quelconque des revendications précédentes, comprenant en outre :
un ventilateur (57) prévu dans un trajet d'écoulement d'air incluant la section d'alimentation (4), l'espace de logement et la section d'évacuation (5) et configuré pour évacuer de l'air depuis l'espace de logement vers un extérieur de l'armoire (1).

13. Appareil de traitement de linge (100) selon la revendication 12, dans lequel la section de fermeture (9) est prévue dans une section aval du trajet d'écoulement d'air à un endroit guidant l'air qui est passé à travers le ventilateur (57) vers l'extérieur de l'armoire (1).

14. Appareil de traitement de linge (100) selon la revendication 12 ou 13, comprenant en outre une section de réduction de pression (7) prévue dans une section amont du trajet d'écoulement d'air à un endroit guidant l'air qui s'écoule vers le ventilateur (57), la section de réduction de pression (7) étant configurée pour évacuer l'air depuis l'espace de logement jusque dans l'armoire (1) en fonction d'une pression dans l'espace de logement.
